# EUROPEAN PATENT SPECIFICATION

(11) **EP 3 835 749 B1**
(45) Date of publication and mention of the grant of the patent: **18.10.2023**
(21) Application number: 18929556.1
(22) Date of filing: 29.09.2018
(51) Int. Cl.: G01M 13/04, F16C 35/00, F16C 37/00, F16C 35/04, F16C 41/00, F16C 19/52, F16C 19/54, F16C 35/06, F16C 35/067

(54) **INTEGRATED BEARING SEAT CAPABLE OF ACCURATELY DETECTING OPERATING CONDITION OF BEARING**
INTEGRIERTER LAGERSITZ ZUR GENAUEN ERFASSUNG DES BETRIEBSZUSTANDES EINES LAGERS
SIÈGE DE PALIER INTÉGRÉ APTE À DÉTECTER AVEC PRÉCISION L'ÉTAT DE FONCTIONNEMENT D'UN PALIER

(30) Priority: 06.08.2018 CN 201810883662
(43) Date of publication of application: 16.06.2021
(73) Proprietor: ZHEJIANG UTE BEARING CO., LTD, Taizhou, Zhejiang 318055 (CN)
(72) Inventor: ZHEN, Zixun, Luqiao District Taizhou, Zhejiang 318055 (CN); ZHEN, Yikun, Luqiao District Taizhou, Zhejiang 318055 (CN); ZHEN, Leiting, Luqiao District Taizhou, Zhejiang 318055 (CN)
(74) Representative: JD&P Patent Attorneys Joanna Dargiewicz & Partners
(86) International application number: PCT/CN2018/108517
(87) International publication number: WO 2020/029410

(56) References cited:
- WO-A1-2013/095890
- CN-A- 101 818 755
- CN-A- 103 063 319
- CN-A- 103 982 542
- CN-A- 107 250 586
- CN-A- 107 830 065
- CN-B- 102 175 369
- CN-U- 206 311 258
- GB-A- 2 261 288
- JP-A- 2002 206 527
- JP-A- 2002 364 661
- US-A- 3 807 815

## Description

### TECHNICAL FIELD

The present invention belongs to the technical field of bearings, and relates to an integrated bearing seat capable of accurately detecting operating conditions of bearings.

### BACKGROUND OF THE PRESENT INVENTION

The bearing is usually sleeved on a spindle. The spindle drives an inner ring of the bearing to rotate in the process of high-speed rotation; and the temperature of the bearing rises. On the other hand, when the temperature of the lubricating grease in the bearing is higher than 100°C, the viscosity of the lubricating grease is too low; and the failure of lubricating performance will cause damage to the bearing. In the prior art, when detecting the temperature of the bearing under operating conditions, a temperature sensor is usually arranged on a bearing seat or a shaft sleeve; the temperature of the bearing inside the shaft sleeve is inferred through simulation field analysis; and the temperature is a simulated temperature, not the actual temperature of the bearing, thereby causing a deviation between the two, so that the operating temperature of the bearing during operation cannot be directly reflected.

For example, Chinese patent publication CN107764418 A [Application No.: 201710745842.3] discloses a bearing temperature detection program system, which is mainly composed of a temperature acquisition and wireless transmission module, a bearing thermometer, a temperature sensor, a ZigBee/RFD module, a master control terminal, a ZigBee network adapter, a database, a master console and an audible and visual alarm. The bearing thermometer is arranged in the temperature acquisition and wireless transmission module and is connected with the temperature sensor; the temperature sensor is connected with the ZigBee/RFD module; the master control terminal is arranged at the right side of the temperature acquisition and wireless transmission module; the ZigBee network adapter is arranged in the master control terminal and is connected with the ZigBee/RFD module; the master console is connected with the ZigBee network adapter; the database is arranged above the master console; and the audible and visual alarm is arranged below the master console. The system can greatly improve the reliability of a bearing temperature detection system while reducing the power consumption of the system. However, the patent also fails to directly collect temperature data for the bearing, so the temperature acquisition reliability needs to be further improved.

Chinese patent publication CN102589883 A [Application No.: 20121048067.3] also discloses a test method and a test device for detecting temperature and dynamic torque of bearings. The method comprises: applying a pre-tightening force in a predetermined direction to a bearing to be detected and driving the bearing to rotate; detecting the temperature and dynamic torque of the bearing to be detected during rotation; when the bearing temperature detection data reaches a set temperature value within a predetermined time and/or the bearing dynamic torque detection data reaches a set torque value within a predetermined time, judging that the bearing to be detected is damaged. The device comprises a bearing pre-tightening and dragging mechanism, a bearing temperature and torque detecting unit and a bearing damage judging unit The temperature and dynamic torque of the bearing during rotation can be detected in real time by applying the pre-tightening force in the predetermined direction to the bearing to be detected and driving the bearing to be detected to rotate; and whether the bearing to be detected is damaged can be judged accordingly. The method and the device are suitable for detecting the manufacturing quality of the bearings, and can apparently shorten the research and development time period of the bearings through test analysis and improvement of the bearing production process. After careful observation, the applicant has found that the temperature sensor of the invention is mounted in a special shaft head, and the actually detected temperature is the temperature of a shaft head, but the temperature of the shaft head cannot directly reflect the temperature of the bearings.

Chinese Utility Model No. 206311258 U discloses a high-speed accurate main shaft retightening force test device, sleeve and back sleeve before the both ends of base are provided with respectively, rotor pass through the bearing and install in the front in sleeve and the back sleeve, preceding sleeve is fixed with the base, back sleeve passes through the guide pin and slides the setting on the base, be provided with piezoelectricity actuator support on sleeve and the back base between the sleeve in the front, be used for promoting the telescopic piezoelectricity actuator in back along what rotor circumference equipartition had that a plurality of and rotor parallel on the actuator support The utility model discloses the pretension displacement of retightening force, the telescopic pretension displacement in back and rotor when the measurable quantity test bench is static reaches the correlation of static retightening force down and pretension displacement Retightening force, the telescopic pretension displacement in back, the pretension displacement of rotor, the temperature of bearing, preceding sleeve and the telescopic vibration in back in the time of can also measuring the test bench operation to relation between down above each parameter of research rotor motion state.

Japanese Patent Publication No. 2002206527 A provides a main spindle rotatable at a high speed by suppressing a difference in temperature between inner and outer rings of a bearing within a previously set scope. The main spindle device has a temperature measuring collar arranged in contact with the inner ring of the bearing and having excellent heat conductivity, a non-contact type temperature sensor arranged in a sleeve to measure a temperature of the temperature measuring collar, a computing device calculating a temperature of the temperature measuring collar from a signal of the non-contact type temperature sensor, a contact type temperature sensor arranged in contact with the outer ring of the bearing to measure a temperature of the outer ring of the bearing, a computing device calculating a temperature of the outer ring of the bearing from a signal of the contact type temperature sensor, a computing device calculating a difference in temperature from the obtained temperature of the inner and outer rings of the bearing, and a controller controlling a cooling liquid set temperature of a main spindle cooler.

### SUMMARY OF PRESENT INVENTION

The purpose of the present invention is to provide an integrated bearing seat capable of accurately detecting operating conditions of bearings to solve the above problems.

To achieve the above purpose, the following technical solution is adopted by the present invention:

An integrated bearing seat capable of accurately detecting operating conditions of bearings comprises a shaft sleeve, wherein a plurality of bearings are arranged in the shaft sleeve; a rear end cover and a front end cover are respectively arranged at two ends of the shaft sleeve; and a bearing operating condition detector, which directly corresponds to an outer ring and/or an inner ring of each bearing so as to detect the temperature of the outer ring and/or the inner ring of each bearing, is arranged in the shaft sleeve.

In the integrated bearing seat capable of accurately detecting the operating conditions of the bearings, the bearing operating condition detector comprises a first bearing operating condition detection mechanism which is located between the rear end cover and the shaft sleeve and directly corresponds to the outer ring and/or the inner ring of each bearing so as to detect the temperature of the outer ring and/or the inner ring of the bearing.

In the integrated bearing seat capable of accurately detecting the operating conditions of the bearings, the first bearing operating condition detection mechanism comprises a first temperature sensor corresponding to the outer ring of the bearing close to the rear end cover and a second temperature sensor corresponding to the inner ring of the bearing close to the rear end cover.

In the integrated bearing seat capable of accurately detecting the operating conditions of the bearings, the first bearing operating condition detection mechanism further comprises a first PCB connected with the rear end cover; and the first temperature sensor and the second temperature sensor are connected with the first PCB.

In the integrated bearing seat capable of accurately detecting the operating conditions of the bearings, a first accelerometer is further arranged on the first PCB.

In the integrated bearing seat capable of accurately detecting the operating conditions of the bearings, a first displacement sensor is arranged between the first PCB and the bearing.

In the integrated bearing seat capable of accurately detecting the operating conditions of the bearings, two PCB locating grooves symmetrically arranged along a center line of the rear end cover are formed in the rear end cover, wherein two first locating fixture blocks symmetrically arranged along the center line of the first PCB are arranged on the first PCB; the first locating fixture blocks are clamped into the PCB locating grooves; a first temperature sensor is arranged on one of the first locating fixture blocks; a second temperature sensor is arranged on the other first locating fixture block; and the first accelerometer is located on one of the first locating fixture blocks.

In the integrated bearing seat capable of accurately detecting the operating conditions of the bearings, a second bearing operating condition detection mechanism which directly corresponds to the outer ring and/or the inner ring of each bearing so as to detect the temperature of the outer ring and/or the inner ring of each bearing is arranged between the front end cover and the shaft sleeve.

In the integrated bearing seat capable of accurately detecting the operating conditions of the bearings, the second bearing operating condition detection mechanism comprises a third temperature sensor corresponding to the outer ring of the bearing close to the front end cover and a fourth temperature sensor corresponding to the inner ring of the bearing close to the front end cover, and also comprises a second PCB, wherein two second locating fixture blocks symmetrically arranged along the center line of the second PCB are arranged on the second PCB; a third temperature sensor is arranged on one of the second locating fixture blocks; a fourth temperature sensor is arranged on the other second locating fixture block; a second accelerometer is arranged on one of the second locating fixture blocks; and a second displacement sensor is arranged between the second PCB and each bearing.

In the integrated bearing seat capable of accurately detecting the operating conditions of the bearings, a spacer ring is arranged on an inner wall of the shaft sleeve; at least one bearing is respectively arranged on both sides of the spacer ring; and at least one deformation ring is arranged between the spacer ring and each bearing.

In the integrated bearing seat capable of accurately detecting the operating conditions of the bearings, the deformation ring is of an annular shape and located at one side of the spacer ring close to the rear end cover; and one side of the deformation ring is in tight jacking fit with the outer ring of each bearing.

In the integrated bearing seat capable of accurately detecting the operating conditions of the bearings, a cooling part capable of being connected with a cooling medium is arranged on the outer wall of the shaft sleeve.

In the integrated bearing seat capable of accurately detecting the operating conditions of the bearings, the cooling part is a spiral groove; and both ends of the groove extend to both ends of the shaft sleeve respectively.

Compared with the prior art, the present invention has the advantages as follows.
1. The present invention can directly detect the temperature of the bearings under the operating conditions, and can obtain more accurate and reliable detection results than the judgement of the temperature of the bearings by detecting the temperature of the shaft sleeve in the prior art; in addition, the bearings are directly mounted and connected with the front end cover and the rear end cover to form an integrated structure in the present invention, which actually omits the process of model selection and assembly by users, thereby improving the production efficiency.
2. A plurality of temperature sensors are provided to obtain multi-point temperatures, so that the temperatures of the outer ring and the inner ring of the bearings at the front end and the rear end in the shaft sleeve can be accurately reflected.
3. After the accelerometer is arranged, the vibration of the spindle can be detected, to judge the vibration borne by the bearings.
4. The displacement sensors are arranged so that the wear data or precision lives of bearings can be obtained through the displacement deviation of the spindle; and the two displacement sensors are symmetrically arranged and can analyze the inclination of the spindle, thereby knowing the conditions of the bearings during operation.
5. The dimensional change of the bearings caused by thermal expansion and cold contraction can be compensated by arranging the spacer ring and deformation ring in the shaft sleeve, so that the bearings can operate under the optimum operating conditions, thereby prolonging the service lives of the bearings.
6. The shaft sleeve is provided with the cooling part, so that the temperature of the shaft sleeve can be lowered during operation; the temperature rise of the bearings and the temperature difference between the inner ring and the outer ring can be reduced by heat conduction, so that the bearings can operate stably to further prolong the service lives of the bearings.

Other advantages, objectives and features of the present invention will be partially reflected by the following description, and will be partially understood by those skilled in the art through the study and practice of the present invention.

### DESCRIPTION OF THE DRAWINGS

Fig. 1 is an external schematic diagram of the present invention;
Fig. 2 is a sectional view A-A of Fig. 1;
Fig. 3 is a sectional view B-B of Fig. 1;
Fig. 4 is a sectional view E-E of Fig. 1; and
Fig. 5 is an exploded view of the present invention.

In the figures, shaft sleeve 1, spindle 1a, locating ring 1b, bearing 2, rear end cover 3, shaft sleeve stopping part 3a, front end cover 4, bearing operating condition detector 5, first bearing operating condition detection mechanism 6, first temperature sensor 7, second temperature sensor 8, first PCB 9, first sensor locating ring 9a, first accelerometer 10, first displacement sensor 11, PCB locating groove 12, first locating fixture block 13, temperature sensor mounting hole 13a, accelerometer mounting hole 13b, locating screw hole 13c, second bearing operating condition detection mechanism 14, third temperature sensor 15, fourth temperature sensor 16, second PCB 17, second sensor locating ring 17a, second locating fixture block 18, second accelerometer 19, second displacement sensor 20, spacer ring 21, deformation ring 22 and cooling part 23.

### DETAILED DESCRIPTION OF PREFERRED EMBODIMENTS

The present invention will be further illustrated below with reference to the accompanying drawings.

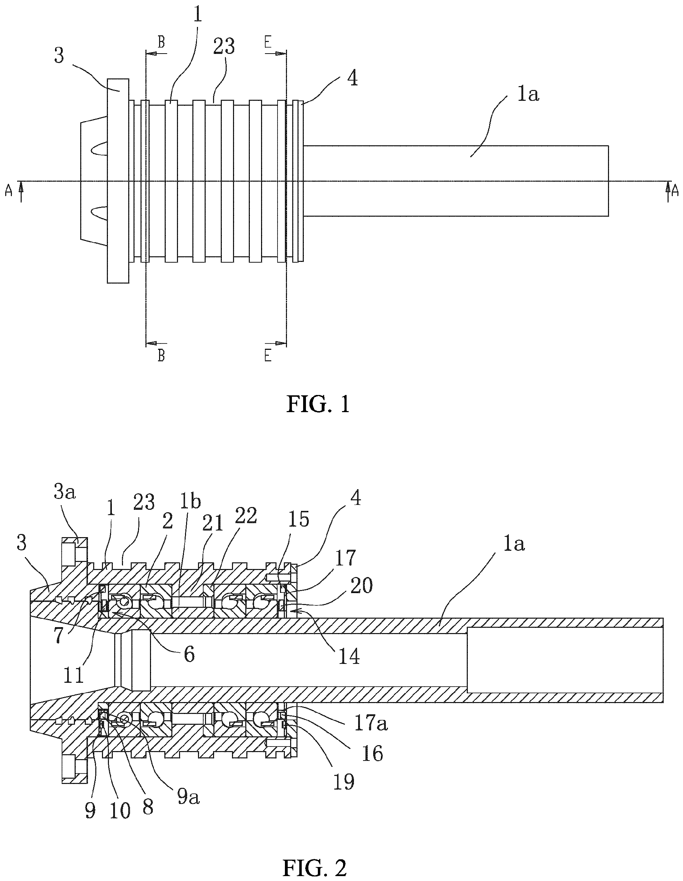

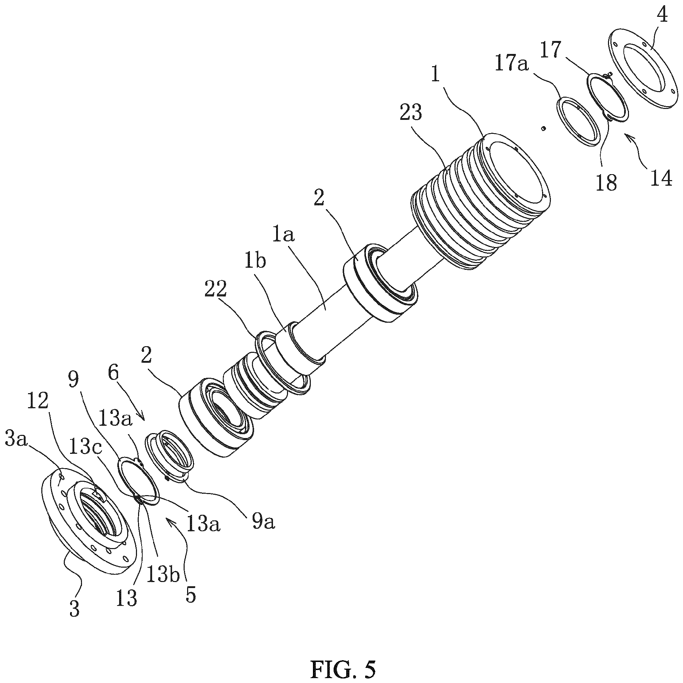

As shown in Fig. 1 and Fig. 5, an integrated bearing seat capable of accurately detecting operating conditions of bearings comprises a shaft sleeve 1, which is cylindrical. A plurality of bearings 2 are arranged in the shaft sleeve 1; and a rear end cover 3 and a front end cover 4 are respectively arranged at both ends of the shaft sleeve 1. In the present embodiment, the number of bearings 2 is not limited; those skilled in the art can adjust the number of bearings according to actual operation needs. Outer rings of the bearings are in tight jacking fit with an inner wall of the shaft sleeve 1; and the inner rings of bearings 2 are sleeved on and connected with a spindle 1a, and also rotate synchronously when the spindle 1a rotates. The shaft sleeve 1 can be connected with the front end cover 4 and the rear end cover 3 in a manner of screw connection, pin connection or clamping connection, which is a common means of those skilled in the art In the present embodiment, a shaft sleeve stopping part 3a is arranged on the rear end cover 3; the shaft sleeve 1 is sleeved on the rear end cover 3 with an end abutted against the shaft sleeve stopping part 3a.

As shown in Fig. 2, a bearing operating condition detector 5, which directly corresponds to the outer ring and/or the inner ring of each bearing 2 so as to detect the temperature of the outer ring and/or the inner ring of each bearing 2, is arranged in the shaft sleeve 1. In the present embodiment, since the bearing operating condition detector 5 directly corresponds to the inner ring and/or the outer ring of each bearing 2, the measured temperature directly reflects the inner ring and/or the outer ring of each bearing 2, thereby obtaining accurate test data.

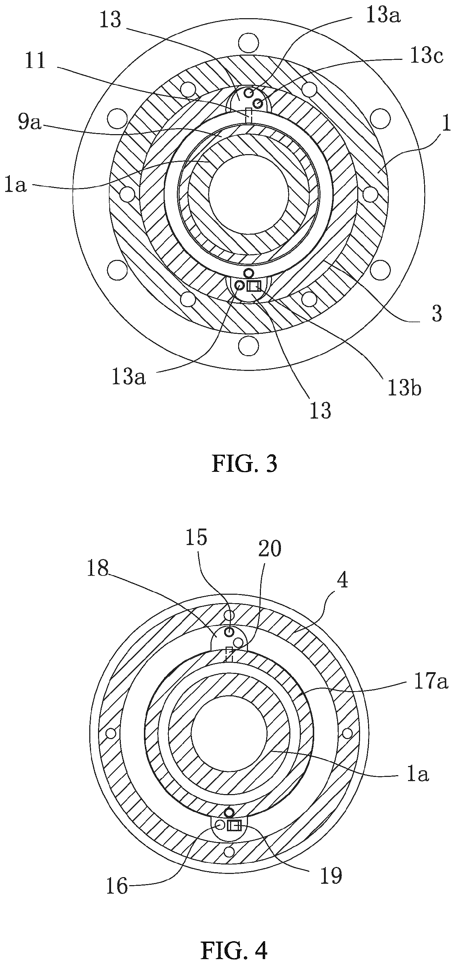

In the present embodiment, as shown in Fig. 3, the bearing operating condition detector 5 comprises a first bearing operating condition detection mechanism 6, which is located between the rear end cover 3 and the shaft sleeve 1 and directly corresponds to the outer ring and/or the inner ring of each bearing 2 so as to detect the temperature of the outer ring and/or the inner ring of each bearing 2. The first bearing operating condition detection mechanism 6 directly detects the temperature of the outer ring and/or the inner ring of each bearing 2 close to the rear end cover 3.

As shown in Fig. 4, the bearing operating condition detector 5 may also be a second bearing operating condition detection mechanism 14, which is arranged between the front end cover 4 and the shaft sleeve 1 and directly corresponds to the outer ring and/or the inner ring of each bearing 2 so as to detect the temperature of the outer ring and/or the inner ring of each bearing 2.

Alternatively, the bearing operating condition detector 5 may be a first bearing operating condition detection mechanism 6 and a second bearing operating condition detection mechanism 14, both of which have the structures as described above. In other words, the bearing operating condition detector 5 comprises three modes: a single first bearing operating condition detector 6, a single second bearing operating condition detector 14, and a combination of the first bearing operating condition detector 6 and the second bearing operating condition detector 14.

The first bearing operating condition detection mechanism 6 comprises a first temperature sensor 7 corresponding to the outer ring of the bearing 2 close the rear end cover 3 and a second temperature sensor 8 corresponding to the inner ring of the bearing 2 close to the rear end cover 3. The first temperature sensor 7 directly detects the temperature of the outer ring of the bearing 2; and the second temperature sensor 8 directly detects the temperature of the inner ring of the bearing 2.

Since the outer ring of each bearing 2 is relatively stationary during operation, the first temperature sensor 7 may be in direct contact with the outer ring of each bearing 2, thereby reflecting the temperature of the outer ring of each bearing 2. A commercially available thermocouple can be used; and the first temperature sensor 7 may not be in contact with the outer ring of each bearing 2, and may be a commercially available infrared thermometer or infrared temperature probe. The inner ring of each bearing 2 rotates with the spindle 1a when operating, and is not suitable for direct contact with the inner ring of each bearing 2. The commercially available infrared thermometer or infrared temperature probe is preferred.

The first bearing operating condition detection mechanism 6 further comprises a first PCB 9 connected with the rear end cover 3. The first temperature sensor 7 and the second temperature sensor 8 are arranged on the first PCB 9. Those skilled in the art should know that circuits can be printed on the PCB, so that the PCB is directly electrically connected with the first temperature sensor 7 and the second temperature sensor 8, thereby saving the wiring. On the basis of the disclosure of the present embodiment, those skilled in the art should know a structure and a method for electrically connecting the first PCB 9 with the first temperature sensor 7 and the second temperature sensor 8, so the structure and the method are not repeated herein.

A first accelerometer 10 is further arranged on the first PCB 9 and is used for testing the vibration of the entire bearing seat A first displacement sensor 11 is arranged between the first PCB 9 and each bearing 2. The first displacement sensor 11 is used for detecting an offset degree of the spindle 1a, thereby analyzing a displacement deviation between each bearing 2 and the spindle 1a. In the present embodiment, both the first accelerometer 10 and the first displacement sensor 11 are available in the prior art, and thus may be commercially available.

Two PCB locating grooves 12 symmetrically arranged along a center line of the rear end cover 3 are formed in the rear end cover 3. Two first locating fixture blocks 13 symmetrically arranged along the center line of the first PCB 9 are arranged on the first PCB 9. Certainly, the two first locating fixture blocks 13 can also be spaced at a certain angle such as 90° and 120°. Through this arrangement, the first locating fixture blocks 13 are clamped into the PCB locating grooves 12; the first temperature sensor 7 is arranged on one of the first locating fixture blocks 13, and the second temperature sensor 8 is arranged on the other first locating fixture block 13. The first accelerometer 10 is located on one of the first locating fixture blocks 13.

In the present embodiment, through holes or grooves for mounting the first accelerometer 10, the first temperature sensor 7 and the second temperature sensor 8 are formed in the first PCB 9. A threaded hole is further formed in the first PCB 9 and used for screwing and fixing with the rear end cover 3. After the first accelerometer 10 is mounted on the first PCB 9, the vibration on the rear end cover 3 is directly transmitted to the first PCB 9, and the first accelerometer 10 obtains vibration data.

Specifically, temperature sensor mounting holes 13a, accelerometer mounting holes 13b and locating screw holes 13c are respectively formed in the two first locating fixture blocks 13; the first temperature sensor 7 and the second temperature sensor 8 are mounted on the temperature sensor mounting holes 13a; the first accelerometers 10 are mounted on the accelerometer mounting holes 13b; at least one locating screw hole 13c is formed in each first locating fixture block 13; and a bolt is screwed into the locating screw hole 13c to form a fixed connection with the rear end cover 3.

As mentioned above, the first bearing operating condition detection mechanism 6 can obtain the temperatures of the outer ring and the inner ring of each bearing, the offset data of a position of the spindle 1a close to one side of the rear end cover 3 and the vibration data of the rear end cover 3, but cannot obtain the offset data of a position of the spindle 1a close to one side of the front end cover 4 and the vibration data of the front end cover 4, and can only obtain the temperature of the bearing 2 at one side close to the rear end cover 3 when more than two bearings 2 are provided. Apparently, the data lacks comprehensiveness. Therefore, in the present embodiment, as a preferred solution, as shown in Fig. 4, the second bearing operating condition detection mechanism 14, which directly corresponds to the outer ring and/or the inner ring of each bearing 2 so as to detect the temperature of the outer ring and/or the inner ring of each bearing 2, is arranged between the front end cover 4 and the shaft sleeve 1.

Specifically, the second bearing operating condition detection mechanism 14 comprises a third temperature sensor 15 corresponding to the outer ring of the bearing 2 close to the front end cover 4 and a fourth temperature sensor 16 corresponding to the inner ring of the bearing 2 close to the front end cover 4. The second bearing operating condition detection mechanism 14 also comprises a second PCB 17. Two second locating fixture blocks 18 symmetrically arranged along the center line of the second PCB 17 are arranged on the second PCB 17; a third temperature sensor 15 is arranged on one of the second locating fixture blocks 18; a fourth temperature sensor 16 is arranged on the other second locating fixture block 18; a second accelerometer 19 is arranged on one of the second locating fixture blocks 18; and a second displacement sensor 20 is arranged between the second PCB 17 and the bearing 2.

Refer to the first PCB 9 for other specific structures of the second PCB 17 which will not be repeated herein.

In addition, after a lot of experiments, the applicant has found that more accurate measurement data can be obtained when the positions of the first displacement sensor 11 and the second displacement sensor 20 are relatively fixed. Therefore, an annular first sensor locating ring 9a is fixedly connected to the first PCB 9; and a through hole for mounting the first displacement sensor 11 is formed in the first sensor locating ring 9a. An annular second sensor locating ring 17a is fixedly connected to the second PCB 17, and a through hole for mounting the second displacement sensor 20 is formed in the second sensor locating ring 17a.

The applicant also has found that since the first displacement sensor 11 and the second displacement sensor 20 are located at both ends of the spindle 1a, the data of inclination of the spindle 1a can be obtained by comparing the data collected by the first displacement sensor 11 and the second displacement sensor 20.

Generally, at least two or more bearings 2 are arranged on the spindle 1a. The present embodiment provides a structure for assembling the bearings in groups, so that the operating conditions and the operating performance of the bearings 2 can be improved. As shown in Fig. 2 and Fig. 5, spacer rings 21 are arranged on the inner wall of the shaft sleeve 1, protrude from the inner wall of the shaft sleeve 1, are integrally formed with the shaft sleeve 1, and have the thickness corresponding to the thickness of the outer ring of each bearing 2, i.e., correspond to each other in position. At least one bearing 2 is respectively arranged at two sides of each spacer ring 21; and at least one deformation ring 22 is arranged between each spacer ring 21 and each bearing 2. In the present embodiment, the front end cover 4 is connected with the shaft sleeve 1 through a jacking nut to axially locate the bearing 2 between the front end cover 4 and the spacer ring 21. During the rotation of the spindle 1a, both the spindle 1a and the bearing 2 will generate heat, and the axial dimension of the bearing 2 will change accordingly due to the effect of expansion with heat and contraction with cold, which also means that the different temperatures of the inner ring and the outer ring of the bearing will cause inconsistent dimension changes of the inner ring and the outer ring, thereby causing changes in the pre-tightening force of the bearing and affecting the operating performance of the bearing 2.

In the present embodiment, the deformation ring 22 is of an annular shape, sleeved on the spindle 1a and located between the spacer ring 21 and the bearing 2. The deformation ring 22 can generate axial deformation, thereby absorbing the axial deformation of the bearing 2 caused by expansion with heat and contraction with cold, maintaining the stability of the pre-tightening force of the bearing 2, and continuously maintaining excellent operating performance.

The deformation ring 22 may be a strong spring, an elastic gasket or a metal ring made of soft metal.

Preferably, the deformation ring 22 is of an annular shape and is located at one side of the spacer ring 21 close to the rear end cover 3; and one side of the deformation ring 22 is in tight jacking fit with the outer ring of the bearing 2. As a more preferred solution, a locating ring 1b is sleeved on the spindle 1a, and corresponds to the spacer ring 21 in position; the locating ring 1b is adapted to the inner ring of the bearing 2 in thickness. The two sides of the locating ring 1b are respectively in tight jacking fit with the inner ring of one bearing 2; and the locating ring 1b is made of soft metal. A gap exists between the locating ring 1b and the spacer ring 21.

The present embodiment also provides a structure for cooling the bearing 2 by cooling the shaft sleeve 1, i.e., a cooling part 23 capable of being connected with a cooling medium is arranged on the outer wall of the shaft sleeve 1. A cooling coil may be wound around the cooling part 23, or cooling media such as cooling oil, cooling water and cooling air may be introduced to form heat exchange.

As a preferred solution, in the present embodiment, the cooling part 23 is a spiral groove, both ends of which extend to both ends of the shaft sleeve 1 respectively; and the cooling medium is introduced into the groove, to exchange heat with the bearing 2, thereby adjusting the temperature difference between the inner ring and the outer ring of the bearing and reducing the thermal deformation of the inner ring and the outer ring of the bearing.

Certainly, the cooling part 23 may also be a groove with other shapes, such as an interconnected annular structure, which can also play a role of heat exchange. The cooling part 23 may also be a jacket

Those skilled in the art should understand that when the cooling part 23 is a groove structure, a sealing sleeve needs to be sleeved outside the groove or outside the shaft sleeve 1 to form a relatively closed space for the cooling part 23.

The operating principle of the present invention is as follows:

The first temperature sensor 7, the second temperature sensor 8, the first accelerometer 10 and the first displacement sensor 11 are respectively mounted on the first PCB 9; and the third temperature sensor 15, the fourth temperature sensor 16, the second accelerometer 19 and the second displacement sensor 20 are respectively mounted on the second PCB 17.

The deformation ring 22 is mounted on one side of the shaft sleeve 1 close to the front end cover 4; the bearings 2 are mounted on both sides of each spacer ring 21 of the shaft sleeve 1; the number of bearings is set according to the specific operating conditions and the corresponding length of the spindle 1a; the first PCB 9 is fixedly connected with the rear end cover 3; the second PCB 17 is fixedly connected with the front end cover 4; and the rear end cover 3 and the front end cover 4 are respectively fixedly connected with the shaft sleeve 1 to complete the mounting of the bearing seat

The spindle 1a is inserted into the shaft sleeve 1 and fixed with the inner ring of the bearing 2. When the spindle 1a operates, the temperature of the outer ring and the inner ring of the bearing close to one side of the rear end cover 3 can be directly measured by the first temperature sensor 7 and the second temperature sensor 8; and the temperature of the outer ring and the inner ring of the bearing close to one side of the front end cover 4 can be directly measured by the third temperature sensor 15 and the fourth temperature sensor 16.

The vibration of one side of the spindle 1a close to the rear end cover 3 can be measured by the first accelerometer 10; and the vibration of one side of the spindle 1a close to the front end cover 4 can be measured by the second accelerometer 19.

The displacement change of one side of the spindle 1a close to the rear end cover 3 can be measured by the first displacement sensor 11; the displacement change of one side of the spindle 1a close to the front end cover 4 can be measured by the second displacement sensor 20; and the inclination of the spindle 1a can be measured by comparing the first displacement sensor 11 with the second displacement sensor 20.

The specific embodiments described herein are only examples to illustrate the spirit of the present invention. Those skilled in the art can make various modifications or supplements to the specific embodiments described herein or replace them with similar ways, without departing from the spirit of the present invention or going beyond the scope defined by the appended claims.

The terms such as shaft sleeve 1, spindle 1a, locating ring 1b, bearing 2, rear end cover 3, shaft sleeve stopping part 3a, front end cover 4, bearing operating condition detector 5, first bearing operating condition detection mechanism 6, first temperature sensor 7, second temperature sensor 8, first PCB 9, first sensor locating ring 9a, first accelerometer 10, first displacement sensor 11, PCB locating groove 12, first locating fixture block 13, temperature sensor mounting hole 13a, accelerometer mounting hole 13b, locating screw hole 13c, second bearing operating condition detection mechanism 14, third temperature sensor 15, fourth temperature sensor 16, second PCB 17, second sensor locating ring 17a, second locating fixture block 18, second accelerometer 19, second displacement sensor 20, spacer ring 21, deformation ring 22 and cooling part 23 are widely used herein, but the possibility of using other terms is not excluded. These terms are used only to describe and explain the essence of the present invention more conveniently. The invention is defined by the appended claims.

## Claims

1. An integrated bearing seat capable of accurately detecting operating conditions of bearings, comprising a shaft sleeve (1), wherein a plurality of bearings (2) are arranged in the shaft sleeve (1); a rear end cover (3) and a front end cover (4) are respectively arranged at two ends of the shaft sleeve (1), wherein a bearing operating condition detector (5), which directly corresponds to an outer ring and/or an inner ring of each bearing (2) so as to detect the temperature of the outer ring and/or the inner ring of each bearing (2), is arranged in the shaft sleeve (1); **characterized in that**
the bearing operating condition detector (5) comprises a first bearing operating condition detection mechanism (6) which is located between the rear end cover (3) and the shaft sleeve (1) and directly corresponds to the outer ring and/or the inner ring of each bearing (2) so as to detect the temperature of the outer ring and/or the inner ring of the bearing (2);
the first bearing operating condition detection mechanism (6) comprises a first temperature sensor (7) corresponding to the outer ring of the bearing (2) close to the rear end cover (3) and a second temperature sensor (8) corresponding to the inner ring of the bearing (2) close to the rear end cover (3), so that the first temperature sensor (7) is capable of detecting the temperature of the outer ring of the bearing (2), and the second temperature sensor (8) is capable of detecting the temperature of the inner ring of the bearing (2).

2. The integrated bearing seat capable of accurately detecting the operating conditions of the bearings according to claim 1, wherein the first bearing operating condition detection mechanism (6) further comprises a first PCB (printed circuit board) (9) connected with the rear end cover (3); and the first temperature sensor (7) and the second temperature sensor (8) are connected with the first PCB (9).

3. The integrated bearing seat capable of accurately detecting the operating conditions of the bearings according to claim 2, wherein a first accelerometer (10) is further arranged on the first PCB (9).

4. The integrated bearing seat capable of accurately detecting the operating conditions of the bearings according to claim 2, wherein a first displacement sensor (11) is arranged between the first PCB (9) and the bearing (2).

5. The integrated bearing seat capable of accurately detecting the operating conditions of the bearings according to claim 3, wherein two PCB locating grooves (12) symmetrically arranged along a center line of the rear end cover (3) are formed in the rear end cover (3); two first locating fixture blocks (13) symmetrically arranged along the center line of the first PCB (9) are arranged on the first PCB (9); the first locating fixture blocks (13) are clamped into the PCB locating grooves (12); a first temperature sensor (7) is arranged on one of the first locating fixture blocks (13); a second temperature sensor (8) is arranged on the other first locating fixture block (13); and the first accelerometer (10) is located on one of the first locating fixture blocks (13).

6. The integrated bearing seat capable of accurately detecting the operating conditions of the bearings according to claim 1, wherein a second bearing operating condition detection mechanism (14) which directly corresponds to the outer ring and/or the inner ring of each bearing (2) so as to detect the temperature of the outer ring and/or the inner ring of each bearing (2) is arranged between the front end cover (4) and the shaft sleeve (1).

7. The integrated bearing seat capable of accurately detecting the operating conditions of the bearings according to claim 6, wherein the second bearing operating condition detection mechanism (14) comprises a third temperature sensor (15) corresponding to the outer ring of the bearing (2) close to the front end cover (4) and a fourth temperature sensor (16) corresponding to the inner ring of the bearing (2) close to the front end cover (4), and also comprises a second PCB (17); two second locating fixture blocks (18) symmetrically arranged along the center line of the second PCB (17) are arranged on the second PCB (17); a third temperature sensor (15) is arranged on one of the second locating fixture blocks (18); a fourth temperature sensor (16) is arranged on the other second locating fixture block (18); a second accelerometer (19) is arranged on one of the second locating fixture blocks (18); and a second displacement sensor (20) is arranged between the second PCB (17) and each bearing (2).

8. The integrated bearing seat capable of accurately detecting the operating conditions of the bearings according to claim 1, wherein a spacer ring (21) is arranged on an inner wall of the shaft sleeve (1); at least one bearing (2) is respectively arranged on both sides of the spacer ring (21); and at least one deformation ring (22) is arranged between the spacer ring (21) and each bearing (2).

9. The integrated bearing seat capable of accurately detecting the operating conditions of the bearings according to claim 8, wherein the deformation ring (22) is of an annular shape and located at one side of the spacer ring (21) close to the rear end cover (3); and one side of the deformation ring (22) is in tight jacking fit with the outer ring of each bearing (2).

10. The integrated bearing seat capable of accurately detecting the operating conditions of the bearings according to claim 1, wherein a cooling part (23) capable of being connected with a cooling medium is arranged on the outer wall of the shaft sleeve (1).

11. The integrated bearing seat capable of accurately detecting the operating conditions of the bearings according to claim 10, wherein the cooling part (23) is a spiral groove; and both ends of the groove extend to both ends of the shaft sleeve (1) respectively.

## Patentansprüche

1. Integrierter Lagersitz, der in der Lage ist, die Betriebsbedingungen von Lagern genau zu erfassen, umfassend eine Wellenhülse (1), in der eine Vielzahl von Lagern (2) wobei eine Vielzahl von Lagern (2) in der Wellenhülse (1) angeordnet sind; wobei eine hintere Endabdeckung (3) und eine vordere Endabdeckung (4) jeweils an zwei Enden der Wellenhülse (1) angeordnet sind, wobei ein Detektor (5) der Lagerbetriebsbedingung in der Wellenhülse (1) angeordnet ist, wobei der Detektor der Lagerbetriebsbedingung direkt einem Außenring und/oder einem Innenring jedes Lagers (2) entspricht, um die Temperatur des Außenrings und/oder des Innenrings jedes Lagers (2) zu erfassen, **dadurch gekennzeichnet, dass** der Detektor (5) der Lagerbetriebsbedingung einen ersten Detektionsmechanismus (6) der Lagerbetriebsbedingung umfasst, der zwischen der hinteren Endabdeckung (3) und der Wellenhülse (1) angeordnet ist und direkt dem Außenring und/oder dem Innenring jedes Lagers (2) entspricht, um die Temperatur des Außenrings und/oder des Innenrings des Lagers (2) zu erfassen;
wobei der erste Detektionsmechanismus (6) der Lagerbetriebsbedingung einen ersten Temperatursensor (7), der dem Außenring des Lagers (2) in der Nähe der hinteren Endabdeckung (3) entspricht, und einen zweiten Temperatursensor (8), der dem Innenring des Lagers (2) in der Nähe der hinteren Endabdeckung (3) entspricht, umfasst, so dass der erste Temperatursensor (7) in der Lage ist, die Temperatur des Außenrings des Lagers (2) zu erfassen, und wobei der zweite Temperatursensor (8) in der Lage ist, die Temperatur des Innenrings des Lagers (2) zu erfassen.

2. Integrierter Lagersitz, der in der Lage ist, die Betriebsbedingungen von Lagern genau zu erfassen, nach Anspruch 1, wobei der erste Detektionsmechanismus (6) der Lagerbetriebsbedingung ferner eine erste Leiterplatte (9) umfasst, die mit der hinteren Endabdeckung (3) verbunden ist; und wobei der erste Temperatursensor (7) und der zweite Temperatursensor (8) mit der ersten Leiterplatte (9) verbunden sind.

3. Integrierter Lagersitz, der in der Lage ist, die Betriebsbedingungen von Lagern genau zu erfassen, nach Anspruch 1, wobei auf der ersten Leiterplatte (9) außerdem ein erster Beschleunigungsmesser (10) angeordnet ist.

4. Integrierter Lagersitz, der in der Lage ist, die Betriebsbedingungen von Lagern genau zu erfassen, nach Anspruch 2, wobei ein erster Verschiebungssensor (11) zwischen der ersten Leiterplatte (9) und dem Lager (2) angeordnet ist.

5. Integrierter Lagersitz, der in der Lage ist, die Betriebsbedingungen von Lagern genau zu erfassen, nach Anspruch 3, wobei in der hinteren Endabdeckung (3) zwei Leiterplatte-Positionierungsnuten (12) ausgebildet sind, die symmetrisch entlang einer Mittellinie der hinteren Endabdeckung (3) angeordnet sind; wobei zwei erste Positionierungsbefestigungsblöcke (13), die symmetrisch entlang der Mittellinie der ersten Leiterplatte (9) angeordnet sind, an der ersten PCB (9) angeordnet sind; wobei die ersten Positionierungsbefestigungsblöcke (13) in die Leiterplatte-Positionierungsnuten (12) eingeklemmt sind; wobei ein erster Temperatursensor (7) an einem der ersten Positionierungsbefestigungsblöcke (13) angeordnet ist; wobei ein zweiter Temperatursensor (8) an dem anderen ersten Positionierungsbefestigungsblock (13) angeordnet ist; und wobei der erste Beschleunigungsmesser (10) an einem der ersten Positionierungsbefestigungsblöcke (13) angeordnet ist.

6. Integrierter Lagersitz, der in der Lage ist, die Betriebsbedingungen von Lagern genau zu erfassen, nach Anspruch 1, wobei ein zweiter Detektionsmechanismus (14) der Lagerbetriebsbedingung zwischen der vorderen Endabdeckung (4) und der Wellenhülse (1) angeordnet ist, wobei der zweite Detektionsmechanismus (14) der Lagerbetriebsbedingung direkt mit dem Außenring und/oder dem Innenring jedes Lagers (2) korrespondiert, um die Temperatur des Außenrings und/oder des Innenrings jedes Lagers (2) zu erfassen.

7. Integrierter Lagersitz, der in der Lage ist, die Betriebsbedingungen von Lagern genau zu erfassen, nach Anspruch 6, wobei der zweite Detektionsmechanismus (14) der Lagerbetriebsbedingung einen dritten Temperatursensor (15), der dem Außenring des Lagers (2) in der Nähe der vorderen Endabdeckung (4) entspricht, und einen vierten Temperatursensor (16), der dem Innenring des Lagers (2) in der Nähe der vorderen Endabdeckung (4) entspricht, umfasst und auch eine zweite Leiterplatte (17) umfasst; wobei zwei zweite Positionierungsbefestigungsblöcke (18), die symmetrisch entlang der Mittellinie der zweiten Leiterplatte (17) angeordnet sind, auf der zweiten Leiterplatte (17) angeordnet sind; wobei ein dritter Temperatursensor (15) auf einem der zweiten Positionierungsbefestigungsblöcke (18) angeordnet ist; wobei ein vierter Temperatursensor (16) auf dem anderen zweiten Positionierungsbefestigungsblock (18) angeordnet ist; wobei ein zweiter Beschleunigungsmesser (19) auf einem der zweiten Positionierungsbefestigungsblöcke (18) angeordnet ist; und wobei ein zweiter Verschiebungssensor (20) zwischen der zweiten Leiterplatte (17) und jedem Lager (2) angeordnet ist.

8. Integrierter Lagersitz, der in der Lage ist, die Betriebsbedingungen von Lagern genau zu erfassen, nach Anspruch 1, wobei ein Abstandsring (21) an einer Innenwand der Wellenhülse (1) angeordnet ist; wobei mindestens ein Lager (2) jeweils auf beiden Seiten des Abstandsrings (21) angeordnet ist; und wobei mindestens ein Verformungsring (22) zwischen dem Abstandsring (21) und jedem Lager (2) angeordnet ist.

9. Integrierter Lagersitz, der in der Lage ist, die Betriebsbedingungen von Lagern genau zu erfassen, nach Anspruch 8, wobei der Verformungsring (22) eine ringförmige Gestalt hat und an einer Seite des Abstandsrings (21) in der Nähe der hinteren Endabdeckung (3) angeordnet ist; und wobei eine Seite des Verformungsrings (22) in fester Presspassung mit dem Außenring jedes Lagers (2) steht.

10. Integrierter Lagersitz, der in der Lage ist, die Betriebsbedingungen von Lagern genau zu erfassen, nach Anspruch 1, wobei an der Außenwand der Wellenhülse (1) ein mit einem Kühlmedium verbindbares Kühlteil (23) angeordnet ist.

11. Integrierter Lagersitz, der in der Lage ist, die Betriebsbedingungen von Lagern genau zu erfassen, nach Anspruch 10, wobei der Kühlteil (23) eine spiralförmige Nut ist und sich beide Enden der Nut jeweils zu beiden Enden der Wellenhülse (1) erstrecken

## Revendications

1. Siège de roulement intégré capable de détecter avec précision des conditions de fonctionnement de roulements, comprenant un manchon d'arbre (1), dans lequel une pluralité de roulements (2) sont disposés dans le manchon d'arbre (1) ; un couvercle d'extrémité arrière (3) et un couvercle d'extrémité avant (4) sont respectivement disposés à deux extrémités du manchon d'arbre (1), dans lequel un détecteur de conditions de fonctionnement du roulement (5), qui correspond directement à une bague extérieure et/ou à une bague intérieure de chaque roulement (2) pour détecter la température de la bague extérieure et/ou de la bague intérieure de chaque roulement (2) est disposé dans le manchon d'arbre (1) ; **caractérisé en ce que** le détecteur de conditions de fonctionnement du roulement (5) comprend un premier mécanisme de détection de conditions de fonctionnement du roulement (6) qui est situé entre le couvercle d'extrémité arrière (3) et le manchon d'arbre (1) et correspond directement à la bague extérieure et/ou à la bague intérieure de chaque roulement (2) afin de détecter la température de la bague extérieure et/ou de la bague intérieure du roulement (2) :
le premier mécanisme de détection de conditions de fonctionnement du roulement (6) comprend un premier capteur de température (7) correspondant à la bague extérieure du roulement (2) proche du couvercle d'extrémité arrière (3) et un second capteur de température (8) correspondant à la bague intérieure du roulement (2) proche du couvercle d'extrémité arrière (3), de sorte que le premier capteur de température (7) soit capable de détecter la température de la bague extérieure du roulement (2) et que le second capteur de température (8) soit capable de détecter la température de la bague intérieure du roulement (2).

2. Siège de roulement intégré capable de détecter avec précision des conditions de fonctionnement de roulements selon la revendication 1, dans lequel le premier mécanisme de détection de conditions de fonctionnement du roulement (6) comprend en outre un premier PCB (carte de circuit imprimé) (9) connecté au couvercle d'extrémité arrière (3) ; et le premier capteur de température (7) et le second capteur de température (8) sont connectés au premier PCB (9).

3. Siège de roulement intégré capable de détecter avec précision des conditions de fonctionnement de roulements selon la revendication 2, dans lequel un premier accéléromètre (10) est disposé en outre sur le premier PCB (9).

4. Siège de roulement intégré capable de détecter avec précision des conditions de fonctionnement de roulements selon la revendication 2, dans lequel un premier capteur de déplacement (11) est disposé entre le premier PCB (9) et le roulement (2).

5. Siège de roulement intégré capable de détecter avec précision des conditions de fonctionnement de roulements selon la revendication 3, dans lequel deux rainures de positionnement de PCB (12) disposées de manière symétrique le long d'une ligne médiane du couvercle d'extrémité arrière (3) sont formées dans le couvercle d'extrémité arrière (3) ;
deux premiers blocs de fixation de positionnement (13) disposés de manière symétrique le long de la ligne médiane du premier PCB (9) sont disposés sur le premier PCB (9) ; les premiers blocs de fixation de positionnement (13) sont serrés dans les rainures de positionnement de PCB (12) ; un premier capteur de température (7) est disposé sur l'un des premiers blocs de fixation de positionnement (13) ; un second capteur de température (8) est disposé sur l'autre premier bloc de fixation de positionnement (13) ; et le premier accéléromètre (10) est situé sur l'un des premiers blocs de fixation de positionnement (13).

6. Siège de roulement intégré capable de détecter avec précision des conditions de fonctionnement de roulements selon la revendication 1, dans lequel un second mécanisme de détection de conditions de fonctionnement du roulement (14) qui correspond directement à la bague extérieure et/ou à la bague intérieure de chaque roulement (2) pour détecter la température de la bague extérieure et/ou de la bague intérieure de chaque roulement (2) est disposé entre le couvercle d'extrémité avant (4) et le manchon d'arbre (1).

7. Siège de roulement intégré capable de détecter avec précision des conditions de fonctionnement de roulements selon la revendication 6, dans lequel le second mécanisme de détection de conditions de fonctionnement du roulement (14) comprend un troisième capteur de température (15) correspondant à la bague extérieure du roulement (2) proche du couvercle d'extrémité avant (4) et un quatrième capteur de température (16) correspondant à la bague intérieure du roulement (2) proche du couvercle d'extrémité avant (4), et comprend en outre un second PCB (17) ; deux seconds blocs de fixation de positionnement (18) disposés de manière symétrique le long de la ligne médiane du second PCB (17) sont disposés sur le second PCB (17) ; un troisième capteur de température (15) est disposé sur l'un des seconds blocs de fixation de positionnement (18) ; un quatrième capteur de température (16) est disposé sur l'autre second bloc de fixation de positionnement (18) ; un second accéléromètre (19) est disposé sur l'un des seconds blocs de fixation de positionnement (18) ; et un second capteur de déplacement (20) est disposé entre le second PCB (17) et chaque roulement (2).

8. Siège de roulement intégré capable de détecter avec précision des conditions de fonctionnement de roulements selon la revendication 1, dans lequel une bague d'espacement (21) est disposée sur une paroi intérieure du manchon d'arbre (1) ; au moins un roulement (2) est disposé respectivement de part et d'autre de la bague d'espacement (21) ; et au moins une bague de déformation (22) est disposée entre la bague d'espacement (21) et chaque roulement (2).

9. Siège de roulement intégré capable de détecter avec précision des conditions de fonctionnement de roulements selon la revendication 8, dans lequel la bague de déformation (22) est sous forme annulaire et située sur un côté de la bague d'espacement (21) proche du couvercle d'extrémité arrière (3) ; et un côté de la bague de déformation (22) est ajusté sans jeu avec la bague extérieure de chaque roulement (2).

10. Siège de roulement intégré capable de détecter avec précision des conditions de fonctionnement de roulements selon la revendication 1, dans lequel une portion de refroidissement (23) capable d'être connectée à un milieu de refroidissement est disposée sur la paroi extérieure du manchon d'arbre (1).

11. Siège de roulement intégré capable de détecter avec précision des conditions de fonctionnement de roulements selon la revendication 10, dans lequel la portion de refroidissement (23) est une rainure en spirale ; et les deux extrémités de la rainure s'étendent respectivement jusqu'aux deux extrémités du manchon d'arbre (1).
